# EUROPÄISCHE PATENTSCHRIFT

(11) **EP 3 018 544 B1**
(45) Veröffentlichungstag und Bekanntmachung des Hinweises auf die Patenterteilung: **21.02.2018**
(21) Anmeldenummer: 14192315.1
(22) Anmeldetag: 07.11.2014
(51) Int. Cl.: G05B 19/042

(54) **Produktions- oder Werkzeugmaschine und Verfahren zum Betrieb einer Produktions- oder Werkzeugmaschine**
Production or machine tool and method of operating a production or machine tool
Machine de production ou machine-outil et procédé destiné au fonctionnement d'une machine de production ou une machine-outil

(43) Veröffentlichungstag der Anmeldung: 11.05.2016
(73) Patentinhaber: Siemens Aktiengesellschaft, 80333 München (DE)
(72) Erfinder: Dotterweich, Bernd, 91058 Erlangen (DE); Gross, Markus, 90762 Fürth (DE); Käsdorf, Oswald, 91091 Grossenseebach (DE); von der Bank, Michael, 90617 Puschendorf (DE)

(56) Entgegenhaltungen:
- HAIBO YANG ET AL: "An open CNC system based on switched ethernet", NETWORKING, SENSING AND CONTROL (ICNSC), 2010 INTERNATIONAL CONFERENCE ON, IEEE, PISCATAWAY, NJ, USA, 10. April 2010 (2010-04-10), Seiten 684-688, XP031674571, ISBN: 978-1-4244-6450-0
- Justin Menga: "CCNP Practical Studies: Layer 3 Switching", Cisco Press , 26. November 2003 (2003-11-26), XP002739448, Gefunden im Internet: URL:http://web.archive.org/web/20120908041 705/http://www.ciscopress.com/articles/art icle.asp?p=102093 [gefunden am 2015-05-11]

## Beschreibung

Die Erfindung betrifft eine im Folgenden mitunter auch nur kurz als Maschine bezeichnete programmgesteuerte Produktions- oder Werkzeugmaschine sowie ein Verfahren zum Betrieb einer solchen Maschine. Dabei ist unter einer Produktions- oder Werkzeugmaschine allgemein ein programmgesteuertes Automatisierungssystem und damit zum Beispiel auch ein Industrieroboter zu verstehen.

Produktions- und Werkzeugmaschinen sind an sich bekannt. Als Werkzeugmaschine werden bekanntlich alle Maschinen bezeichnet, die u.a. im Maschinenbau und im Werkzeugbau zur Bearbeitung von Werkstücken mit Werkzeugen dienen. Zu den Werkzeugmaschinen gehören damit speziell auch sogenannte NC- oder CNC-Maschinen. Ein Beispiel für eine Produktionsmaschine ist eine Druckmaschine. Ein Industrieroboter ist bekanntlich eine programmierbare universelle Maschine, die zur Bearbeitung und Handhabung von Werkstücken sowie für Montagezwecke bestimmt und eingerichtet ist.

Bei Maschinen der eingangs genannten Art ist eine Echtzeitkommunikation zwischen den davon umfassten Komponenten notwendig, zum Beispiel eine Kommunikation zwischen Antriebskomponenten für Achsantriebe oder dergleichen, wie dies zum Beispiel auch in dem Fachartikel "An Open CNC system based on switched internet" von Haibo Yang et al, erschienen am 10.04.2010 in Networking, Sensing and Control (ICNSC), beschrieben ist. Aus Justin Menga: CCNP Practical Studies: Layer-3-Switching", Cisco Press, 26.11.2003, sind Netzwerkknoten bekannt, die als Layer-3-Switch fungieren.

Die im Rahmen der Echtzeitkommunikation zu erfüllenden Bedingungen sind besonders streng. Üblich sind Zykluszeiten (= Reaktionszeiten) von 250 µs oder 125 µs. In Einzelfällen kön nen auch Zykluszeiten bis herunter zu 31,25 µs vorgesehen und notwendig sein. Eine Verletzung der im Folgenden mitunter kurz nur als Zykluszeit bezeichneten Zyklus-/Reaktionszeit führt zwingend zur Ungültigkeit der jeweils übertragenen Daten. Eine Verletzung der Zykluszeit muss auch überwacht werden. Die üblichen Toleranzen liegen bei wenigen 100 ns.

Die Zykluszeit bezieht sich nicht nur auf die Kommunikation, sondern auf das Gesamtsystem der jeweiligen Maschine. Eine Maschine mit mehreren Achsen umfasst als Antriebskomponenten mehrere sogenannte Motormodule mit jeweils einem Leistungsteil und jedem Motormodul ist/sind ein oder mehrere Sensoren zugeordnet. Die Motormodule und die Sensoren werden im Folgenden einzeln und zusammen als Komponenten bezeichnet. Für eine Maschine mit mehreren Achsen und entsprechend mehreren Komponenten müssen innerhalb der Zykluszeit die folgenden Schritte nacheinander komplett abgearbeitet werden:
1. Erfassung und Aufbereitung der Messwerte in den Komponenten
2. Übertragung der Messwerte über das Netzwerk an eine Zentraleinheit der jeweiligen Maschine
3. Berechnen neuer Sollwerte auf Basis der Messwerte mittels der Zentraleinheit (zum Beispiel in Form einer Ausführung (Berechnung) von Regelungsalgorithmen)
4. Übertragung der Sollwerte über das Netzwerk von der Zentraleinheit zu den Komponenten
5. Aufbereitung und Anwendung der neuen Sollwerte in den Komponenten

Auf diese Schritte wird im Folgenden anhand von deren Nummerierung auch als "Schritt 1", "Schritt 2" usw. Bezug genommen. Die verwendeten/resultierenden Kommunikationsbeziehungen beziehen sich nicht nur auf die einzelnen Motormodule (MM), sondern auch auf von den Motormodulen umfasste Einheiten, also zum Beispiel Sensorik in Form von sogenannten Motormesssystemen (MMS) und direkten Messsystemen (DMS). Dies führt dazu, dass - bezogen auf die Zykluszeit - relativ viele Komponenten entsprechend viele Übertragungen mit vergleichsweise kleinen Datenmengen benötigen.

Diese Anforderungen können nur in einem sogenannten Zeitschlitzverfahren erfüllt werden. Ein solches Zeitschlitzverfahren ist grundsätzlich an sich bekannt. Dabei werden im Hochlauf der jeweiligen Maschine der exakte Kommunikationsbedarf innerhalb der Maschine ermittelt und jede einzelne Übertragung hinsichtlich eines Zeitpunkts relativ zur Zykluszeit (Zeitschlitz) exakt geplant. Im Betrieb wird dieser Plan dann nur noch zyklisch abgearbeitet. Jede Komponente "weiß" dabei genau, wo die zuvor geplanten Zeitschlitze für eigene zu sendende Telegramme liegen und sendet diese immer genau zu den entsprechenden Zeitpunkten. Dieses Senden erfolgt sogar dann, wenn gegebenenfalls Voraussetzungen noch nicht vorliegen, weil zum Beispiel Daten, insbesondere lokal aufgenommene Messwerte, noch nicht verfügbar sind. Die weiter oben erwähnte Überwachung der Zykluszeit führt dann dazu, dass in diesem Fall als ungültig markierte Daten gesendet werden.

Das Senden von Telegrammen im Zeitschlitzverfahren setzt eine exakte Synchronität aller Komponenten voraus. Alle Komponenten arbeiten also mit einer gemeinsamen Zeitbasis. Dies geschieht über Synchronisationstelegramme und digitale PLLs. Die Toleranzen bei der Isochronität sind meist kleiner als 50 ns.

Obwohl das Senden von Telegrammen im Zeitschlitzverfahren eine eingeführte und erprobte Technik ist, ergeben sich in der Praxis durchaus noch Probleme. So umfasst ein Netzwerk mit den kommunikativ verbundenen Komponenten oftmals Bereiche mit erschwerten mechanischen oder elektrischen Bedingungen. Ein Beispiel für solche erschwerten mechanischen Bedingungen sind Schleppkabel. Ein Beispiel für erschwerte elektrische Bedingungen sind starke Störfelder. In solchen Bereichen ist die störsicher erreichbare Datenrate begrenzt. Des Weiteren sind in einem Netzwerk oftmals Verbindungen zwischen Bereichen mit gefährlichen Spannungen und Bereichen mit niedriger Spannung, bei denen eine gefahrlose Berührung möglich sein muss, notwendig. Wegen der dann benötigten hoch spannungsfesten galvanischen Trennung sind bei diesen Verbindungen hohe Datenraten unverhältnismäßig teuer. Schließlich lässt es die große Anzahl unterschiedlicher Komponenten üblicherweise nicht zu, alle Komponenten immer mit der neuesten Netzwerktechnologie zu versehen. Selbst in neu projektierten Anlagen müssen häufig Komponenten mit unterschiedlichen Versionen der Netzwerktechnologie miteinander kommunizieren. Dies führt ebenfalls oftmals zu unterschiedlichen Datenraten in Teilen des Netzwerks.

Eine spezielle Anforderung an die Kommunikation entsteht außerdem bei einer Parallelschaltung von Leistungsteilen. Eine dann notwendige Angleichung unvermeidlicher Unterschiede im Verhalten dieser Leistungsteile kann in Hardware (Induktivitäten) und in Software (Ausgleichsregler) erfolgen. Je leistungsfähiger ein solcher Ausgleichsregler ist, desto kleiner können die Induktivitäten dimensioniert werden. Ein leistungsfähiger Ausgleichsregler setzt allerdings eine Kommunikation zwischen den Motormodulen der beteiligten Leistungsteile mit weit über das übliche Maß hinausgehenden Anforderungen voraus. Daraus resultiert eine zusätzliche Belastung des Kommunikationsnetzwerks.

Eine Aufgabe der vorliegenden Erfindung besteht entsprechend darin, eine Produktions- oder Werkzeugmaschine sowie ein Verfahren zum Betrieb einer solchen Maschine anzugeben, bei der bzw. bei dem sich der Kommunikationsbedarf besonders effizient bewältigen lässt.

Diese Aufgabe wird hinsichtlich der im Folgenden mitunter auch nur kurz als Maschine bezeichneten Produktions- oder Werkzeugmaschine erfindungsgemäß mit den Merkmalen des Anspruchs 1 gelöst. Dazu ist bei einer Maschine der eingangs genannten Art, die eine Mehrzahl von hier allgemein als Komponenten bezeichneten Funktionseinheiten, zum Beispiel Motormodule, Terminalmodule, Sensorik usw., umfasst, wobei die Komponenten zur Echtzeitkommunikation mit einer vorgegebenen oder vorgebbaren Zykluszeit in einem Netzwerk zusammengeschlossen und direkt oder indirekt untereinander kommunikativ verbunden sind, vorgesehen, dass zumindest eine der Komponenten als Layer-3-Switch fungiert, also zumindest eine Funktion aufweist, bei der ein eingehendes Telegramm in einem internen Speicher zwischengespeichert und später zu einem vorgegebenen oder vorgebbaren Zeitpunkt weitergesendet wird.

Die oben genannte Aufgabe wird ebenfalls durch ein Verfahren zum Betrieb einer Maschine der eingangs genannten Art, die eine Mehrzahl von untereinander kommunikativ verbundenen Komponenten umfasst, wobei die Komponenten untereinander Telegramme im Rahmen einer Echtzeitkommunikation und während einer vorgegebenen oder vorgebbaren Zykluszeit austauschen und wobei die Te-legramme entweder direkt oder indirekt an eine von der Produktions- oder Werkzeugmaschine umfasste Zentraleinheit gesendet werden, gelöst, indem zumindest eine der Komponenten von einer anderen Komponente empfangene Telegramme zwischenspeichert und ein zwischengespeichertes Telegramm zu einem vorgegebenen, auf die Zykluszeit bezogenen Zeitpunkt weitersendet.

Der Zeitpunkt zum Weitersenden zwischengespeicherter Telegramme wird dabei im Zusammenhang mit einem Hochlauf der Maschine, also im Rahmen einer Planung, wie sie auch einer Planung für das bisherige Zeitschlitzverfahren zugrunde liegt, ermittelt und der jeweiligen Komponente vorgegeben. Jede zwischenspeichernde Komponente arbeitet dann rein zeitschlitzgesteuert.

Der Vorteil der Erfindung besteht darin, dass durch das Zwischenspeichern und spätere Weitersenden zwischengespeicherter Telegramme eine Entkopplung der von der jeweiligen Maschine umfassten Komponenten gelingt. Eine von der Maschine umfasste Komponente, die eingehende Telegramme zwischenspeichert und zwischengespeicherte Telegramme zu einem späteren, auf die Zykluszeit bezogenen Zeitpunkt weitersendet, wird im Folgenden kurz als zwischenspeichernde Komponente oder - entsprechend der üblichen Fachterminologie, allerdings ohne Verzicht auf eine weitergehende Allgemeingültigkeit - als Layer-3-Switch bezeichnet. Eine solche zwischenspeichernde Komponente und daran direkt oder indirekt angeschlossene weitere Komponenten der Maschine bilden zusammen ein aufgrund der zwischenspeichernden Komponente im Wesentlichen unabhängiges Subnetz innerhalb des Kommunikationsnetzwerks (Netzwerk), in dem alle Komponenten der Maschine zusammengeschlossen sind. Dabei ist es unerheblich, ob die weiteren von einem solchen Subnetz umfassten Komponenten ebenfalls zwischenspeichernde Komponenten sind oder nicht. Wesentlich ist, dass die Übermittlung von Telegrammen von einer zwischenspeichernden Komponente zur Zentraleinheit der Maschine zu einem festen, auf die Zykluszeit bezogenen Zeitpunkt erfolgt. Die zwischenspeichernde Komponente sendet also nicht ereignisbezogen, etwa aufgrund eines eingehenden Telegramms, sondern aufgrund einer festen Vorgabe eines jeweiligen Sendezeitpunkts. Die Vorgabe des jeweiligen Sendezeitpunkts erfolgt dabei wie bei der an sich bekannten Zeitschlitzkommunikation. Die zwischenspeichernde Komponente ist also nicht ereignisgesteuert, sondern vielmehr zeitschlitzgesteuert. Die zwischenspeichernde Komponente fügt sich damit nahtlos in das Zeitschlitzverfahren und damit in das bisher übliche Prinzip zur Übertragung von Telegrammen innerhalb einer Maschine der eingangs genannten Art ein. Mit zumindest einer zwischenspeichernden Komponente ergibt sich ein verbessertes (ideales) Kommunikationsnetz für Antriebssysteme, das den Kommunikationsbedarf innerhalb der Maschine befriedigt, ohne die für die Kommunikation mit den übrigen Komponenten benötigten Teile des Netzes zusätzlich zu belasten.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist. Schließlich ist darauf hinzuweisen, dass das hier angegebene Verfahren auch entsprechend der abhängigen Vorrichtungsansprüche weitergebildet sein kann und umgekehrt.

Bei einer Ausführungsform der Maschine sind die Komponenten in einer Baumstruktur direkt oder indirekt mit einer Zentraleinheit der Produktions- oder Werkzeugmaschine verbunden, wobei zumindest die mit der Zentraleinheit direkt verbundene Komponente, über die für weitere Komponenten eine indirekte Verbindung zur Zentraleinheit besteht, als zwischenspeichernde Komponente (als Layer-3-Switch) fungiert.

Wenn die direkt mit der Zentraleinheit verbundene Komponente als zwischenspeichernde Komponente fungiert, ergibt sich das gesamte Netzwerk der Maschine ohne die Zentraleinheit als von der Zentraleinheit unabhängiges Subnetz. Die zwischenspeichernde Komponente kann zum Beispiel von den eingehenden und zwischengespeicherten Telegrammen einzelne oder alle Telegramme zusammenfassen und zusammengefasst zu einem vorgegebenen Sendezeitpunkt an die Zentraleinheit übermitteln. Durch das Zusammenfassen mehrerer Telegramme kann die Bandbreite der Kommunikationsverbindung zwischen der Zentraleinheit und der direkt damit verbundenen zwischenspeichernden Komponente optimal ausgenutzt werden. Die Datenrate über diese Verbindung kann dabei zum Beispiel deutlich höher sein, als eine Datenrate einzelner oder aller Verbindungen in dem Subnetz. An eine solche zwischenspeichernde Komponente, die direkt mit der Zentraleinheit verbunden ist, können sich weitere zwischenspeichernde Komponenten anschließen. Dadurch entstehen weitere Subnetze mit einer Hierarchie entsprechend einer von der Zentraleinheit ausgehenden Reihenfolge der zwischenspeichernden Komponenten. Für jedes Subnetz ergeben sich der Vorteil der Entkopplung und der Vorteil der Möglichkeit zur Zusammenfassung zwischengespeicherter Telegramme.

Bei einer alternativen oder zusätzlichen Ausführungsform der Maschine sind die Komponenten ebenfalls in einer Baumstruktur mit einer Zentraleinheit der Maschine verbunden. Bei dieser Ausführungsform fungiert aber nicht notwendig die mit der Zentraleinheit direkt verbundene Komponente als zwischenspeichernde Komponente. Stattdessen fungiert eine direkt oder indirekt mit der Zentraleinheit verbundene Komponente als zwischenspeichernde Komponente. Mit dieser zwischenspeichernden Komponente sind weitere Komponenten verbunden. Bei den so verbundenen und zu einem Subnetz zusammengefassten Komponenten handelt es sich zum Beispiel um Motormodule von innerhalb der Maschine parallel geschalteten Leistungsteilen. Der Vorteil dieser Ausführungsform besteht darin, dass innerhalb des Subnetzes, das sich mit der zwischenspeichernden Komponente und jeder daran angeschlossenen weiteren Komponente ergibt, eine von der Kommunikation in dem Gesamtnetzwerk unabhängige Kommunikation möglich ist, also zum Beispiel eine Kommunikation, wie sie bei dem eingangs skizzierten Szenario einer Parallelschaltung von Leistungsteilen notwendig ist. In dem Subnetz kann damit zum Beispiel eine Echtzeitkommunikation abgewickelt werden, die von der Echtzeitkommunikation in dem Gesamtnetzwerk unabhängig ist und noch strengeren Randbedingungen genügen muss, als die Echtzeitkommunikation in dem Gesamtnetzwerk.

Bei einer Ausführungsform des Verfahrens zum Betrieb einer Maschine der eingangs genannten Art, bei dem die Maschine eine Mehrzahl von untereinander direkt und indirekt kommunikativ verbundenen Komponenten umfasst, wobei die Komponenten untereinander Telegramme im Rahmen einer Echtzeitkommunikation und während einer vorgegebenen oder vorgebbaren Zykluszeit austauschen und wobei die Telegramme entweder direkt oder indirekt an eine von der Maschine umfasste Zentraleinheit gesendet werden, ist vorgesehen, dass zumindest eine der Komponenten von einer anderen Komponente empfangene Telegramme zwischenspeichert und ein zwischengespeichertes Telegramm zu einem vorgegebenen, auf die Zykluszeit bezogenen Zeitpunkt weitersendet. Mit dem Zwischenspeichern und späteren Weitersenden eines zwischengespeicherten Telegramms zu einem fest vorgegebenen Sendezeitpunkt, der seinerseits auf die für die Echtzeitkommunikation vorgegebene Zykluszeit bezogen ist, fügt sich die zwischenspeichernde Komponente bei dem Betriebsverfahren der Maschine so wie oben bereits beschrieben in das bisherige Konzept der Echtzeitkommunikation nach dem Zeitschlitzverfahren ein, denn der jeweils fest vorgegebene Sendezeitpunkt wird wie beim Zeitschlitzverfahren vorgegeben.

Bei einer Ausführungsform des Verfahrens fasst die zwischenspeichernde Komponente mehrere zwischengespeicherte Telegramme zusammen und sendet die zusammengefassten Telegramme zu einem späteren, vorgegebenen und auf die Zykluszeit bezogenen Zeitpunkt weiter. Auch mit so zusammengefassten Telegrammen fügt sich die zwischenspeichernde Komponente noch nahtlos in das bisherige Konzept der Echtzeitkommunikation nach dem Zeitschlitzverfahren ein. Beim Zusammenfassen zwischengespeicherter Telegramme verschwinden die bisher bei einer Kommunikation nach dem Zeitschlitzverfahren zwischen den einzelnen Telegrammen stets verbleibenden Pausen. Die Zykluszeit wird durch das Zusammenfassen mehrerer Telegramme optimal ausgenutzt und im Ergebnis wird innerhalb derselben Zykluszeit eine Übermittlung einer größeren Nutzdatenmenge oder eine Übermittlung zusätzlicher Telegramme möglich.

Bei einer nochmals weiteren Ausführungsform des Verfahrens werden für ein Telegramm, das bei einer zwischenspeichernden Komponente eingeht und für die Zentraleinheit bestimmt ist, zentral zwei auf die Zykluszeit bezogene Sendezeitpunkte geplant. Bei diesen zentral, zum Beispiel beim Hochlauf der Maschine geplanten Sendezeitpunkten handelt es sich um einen ersten Sendezeitpunkt zum Senden des Telegramms an die jeweilige zwischenspeichernde Komponente sowie einen zweiten Sendezeitpunkt zum Weitersenden der zwischengespeicherten Daten durch die jeweilige Komponente. Dabei gilt die Randbedingung, dass der erste Sendezeitpunkt vor dem zweiten Sendezeitpunkt liegt. Auf diese Weise kann die gesamte Kommunikation innerhalb des Kommunikationsnetzwerks der jeweiligen Maschine zentral geplant werden, so dass das Einhalten harter Echtzeitbedingungen möglich ist und das vom ersten Sendezeitpunkt unabhängige Weiterleiten der zwischengespeicherten Daten zum zweiten Sendezeitpunkt fügt sich weiterhin nahtlos in das bisherige Konzept der Echtzeitkommunikation nach dem Zeitschlitzverfahren ein. Auch hier arbeitet jede zwischenspeichernde Komponente rein zeitschlitzgesteuert.

Die oben genannte Aufgabe wird auch mit einer zwischenspeichernden Komponente, die als Kommunikationsteilnehmer in dem Kommunikationsnetzwerk einer jeweiligen Maschine der eingangs genannten Art fungiert und dafür kommunikativ mit anderen Komponenten derselben Maschine verbunden oder verbindbar ist, gelöst, indem diese nach einem Verfahren wie hier und im Folgenden beschrieben arbeitet und dazu Mittel zur Durchführung des Verfahrens umfasst, nämlich einen internen Speicher zum Zwischenspeichern zumindest der Nutzdaten eines eingehenden Telegramms und eine Verarbeitungseinheit in Form von oder nach Art eines Mikroprozessors zum Überwachen eines vorgegebenen Sendezeitpunkts oder mehrerer vorgegebener Sendezeitpunkte, so dass zwischengespeicherte Daten zu einem jeweils vorgegebenen Sendezeitpunkt weitergesendet werden können und im Betrieb weitergesendet werden.

Diese Funktionalität der Komponente ist dabei bevorzugt in Software implementiert. Die Erfindung ist damit einerseits auch ein Computerprogramm mit durch einen Mikroprozessor oder dergleichen ausführbaren Programmcodeanweisungen und andererseits ein Speichermedium mit einem derartigen Computerprogramm, also ein Computerprogrammprodukt mit Programmcodemitteln, sowie schließlich auch eine zwischenspeichernde Komponente, zum Beispiel ein Motormodul einer Produktions- oder Werkzeugmaschine, in deren Speicher als Mittel zur Durchführung des Verfahrens und seiner Ausgestaltungen ein solches Computerprogramm geladen oder ladbar ist.

Anstelle eines Computerprogramms mit einzelnen Programmcodeanweisungen kann die Implementierung des hier und im Folgenden beschriebenen Verfahrens auch in Form von Firmware erfolgen. Dem Fachmann ist klar, dass anstelle einer Implementation eines Verfahrens in Software stets auch eine Implementation in Firmware oder in Firm- und Software oder in Firm- und Hardware möglich ist. Daher soll für die hier vorgelegte Beschreibung gelten, dass von dem Begriff Software oder dem Begriff Computerprogramm auch andere Implementationsmöglichkeiten, nämlich insbesondere eine Implementation in Firmware oder in Firm- und Software oder in Firm- und Hardware, umfasst sind.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: ein Beispiel für eine Produktions- oder Werkzeugmaschine,
- FIG 2: einzelne von einer Produktions- oder Werkzeugmaschine umfasste Komponenten sowie ein Kommunikationsnetzwerk mit Kommunikationsverbindungen zwischen den Komponenten,
- FIG 3: ein Szenario zur Kommunikation zwischen den Komponenten nach einem grundsätzlich bekannten Zeitschlitzverfahren,
- FIG 4: ein Szenario zur Kommunikation zwischen den Komponenten nach dem hier vorgeschlagenen Ansatz,
- FIG 5: das Kommunikationsnetzwerk gemäß FIG 2 bei Anwendung des hier vorgeschlagenen Ansatzes,
- FIG 6: einen sogenannten Switch sowie
- FIG 7: ein Kommunikationsnetzwerk mit von einer Produktionsoder Werkzeugmaschine umfassten Komponenten bei einer Parallelschaltung von Leistungsteilen.

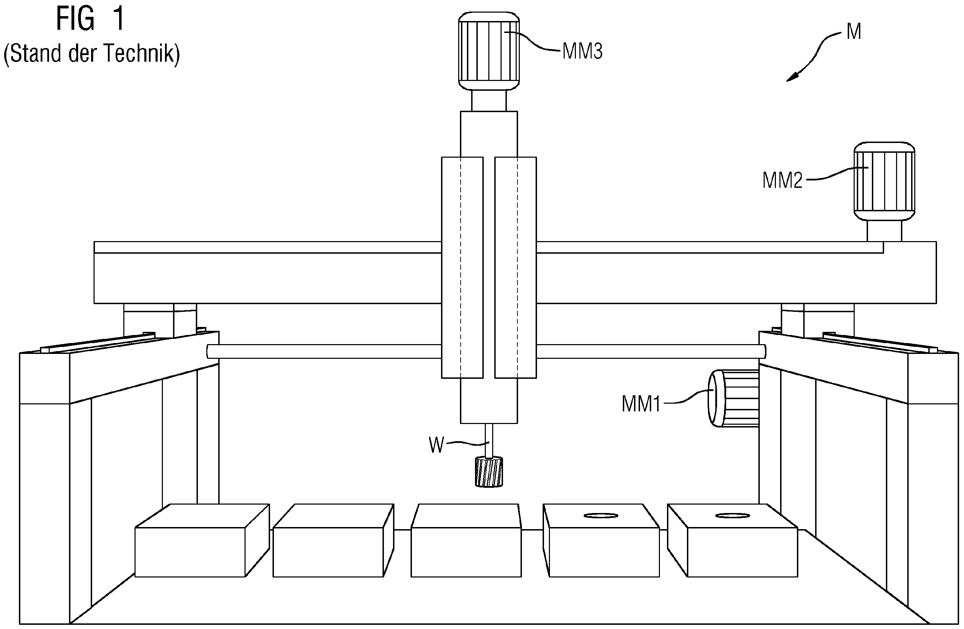

Die Darstellung in FIG 1 zeigt in schematisch vereinfachter Form als Beispiel für eine Produktions- oder Werkzeugmaschine eine im Folgenden kurz als Maschine M bezeichnete Einrichtung mit drei im Folgenden als Motormodule MM1, MM2, MM3 bezeichneten Antriebseinheiten. Mittels dieser Motormodule MM1-MM3 und der davon umfassten, nicht separat bezeichneten Leistungsteile ist bei der exemplarisch gezeigten Maschine M in grundsätzlich an sich bekannter Art eine Beweglichkeit einer Werkzeugaufnahme W in x-Richtung, y-Richtung und z-Richtung möglich.

Die Antriebe der Motormodule MM1-MM3 treiben beim gezeigten Ausführungsbeispiel jeweils eine Gewindespindel an und mittels der Gewindespindel wird jeweils in an sich bekannter Art und Weise ein Schlitten in einer Linearführung bewegt. Auf diese Weise ist - bezogen auf die Blickrichtung, in der die Maschine in der Darstellung in FIG 1 gezeigt ist - eine Auf- und-ab-Bewegung der Werkzeugaufnahme W (z-Richtung; drittes Motormodul MM3) eine Bewegung der Werkzeugaufnahme W nach rechts und nach links (y-Richtung; zweites Motormodul MM2) sowie eine Bewegung der Werkzeugaufnahme W nach vorne und nach hinten (x-Richtung; erstes Motormodul MM1) möglich.
Der hier vorgestellte Ansatz ist allerdings in keinster Weise auf eine konkrete Kinematik der Maschine M beschränkt und insoweit ist die Darstellung in FIG 1 ausdrücklich nur als Beispiel und als Basis für eine Veranschaulichung einer Maschine M sowie einer Mehrzahl davon umfasster Motormodule MM1-MM3 zu verstehen.

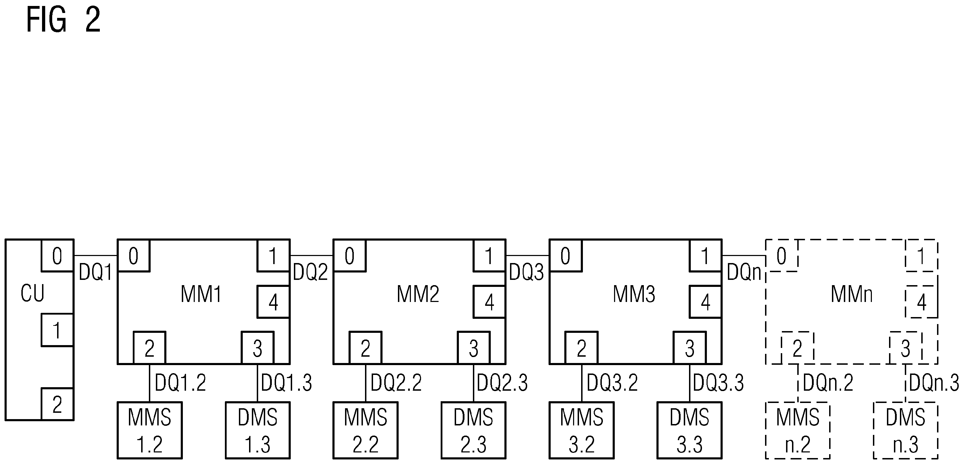

Beim Betrieb der Maschine M ist für eine koordinierte Bewegung der Werkzeugaufnahme W eine koordinierte Ansteuerung der einzelnen Motormodule MM1-MM3 erforderlich. Dafür ist in an sich bekannter Art und Weise eine in FIG 1 nicht gezeigte Zentraleinheit CU (FIG 2) vorgesehen. Die Zentraleinheit CU steuert die einzelnen Motormodule MM1-MM3 in ebenfalls grundsätzlich an sich bekannter Art und Weise entsprechend einem jeweiligen Bearbeitungs- oder Teileprogramm an. Dabei verarbeitet die Zentraleinheit CU Messwerte aus der Maschine M (Schritt 1) und ermittelt auf deren Basis - üblicherweise unter Verwendung von Regelungsalgorithmen - Sollwerte für die einzelnen Motormodule MM1-MM3 (Schritt 3).

Solche Messwerte werden bei den einzelnen Motormodulen MM1-MM3 oder durch diese aufgenommen und an die Zentraleinheit CU gesendet (Schritt 2). Die Sollwerte werden von der Zentraleinheit CU an das jeweilige Motormodul MM1-MM3 gesendet (Schritt 4). Zum Senden solcher Daten werden zwischen den einzelnen Komponenten (Zentraleinheit CU, Motormodule MM1-MM3 sowie der jeweiligen Sensorik) Telegramme ausgetauscht. Die einzelnen Komponenten sind dafür in grundsätzlich an sich bekannter Art und Weise kommunikativ miteinander verbunden und die Basis für die kommunikative Verbindung bildet zum Beispiel ein Bussystem, an welches die einzelnen Komponenten angeschlossen sind. Insgesamt ergibt sich damit für die jeweilige Maschine M ein im Folgenden kurz als Netzwerk bezeichnetes Kommunikationsnetzwerk.

Ein Beispiel für ein solches Netzwerk ist in der Darstellung in FIG 2 gezeigt. Danach umfasst das Netzwerk die bereits erwähnte Zentraleinheit CU sowie einzelne Motormodule MM1-MM3, MMn. Jedes Motormodul MM1-MM3, MMn umfasst ein nicht separat gezeigtes Leistungsteil, zum Beispiel zum Antrieb einer Achse, oder jedem Motormodul MM1-MM3, MMn ist ein solches Leistungsteil zumindest funktional zugeordnet.

Bei der in FIG 1 gezeigten Maschine M umfasst das Netzwerk genau drei Motormodule MM1-MM3. Die Darstellung in FIG 2 zeigt mit dem zumindest einen weiteren Motormodul MMn, dass das Netzwerk nicht auf drei Motormodule MM1-MM3 beschränkt ist und eine zumindest theoretisch beliebige Anzahl von Motormodulen MM1-MM3, MMn umfassen kann.

Die bei den einzelnen Komponenten gezeigten Ziffern ("0", "1" und "2" bei der Zentraleinheit CU sowie "0", "1", "2", "3" und "4" bei den Motormodulen MM1-MMn) stellen die sogenannten Ports der jeweiligen Komponente dar. An die Ports sind die Verbindungsleitungen des Netzwerks angeschlossen. Auf diese Weise ist das erste Motormodul MM1 mit der Zentraleinheit CU verbunden. Das zweite Motormodul MM2 ist mit dem ersten Motormodul MM1 und über dieses indirekt mit der Zentraleinheit CU verbunden. Das dritte Motormodul MM3 ist mit dem zweiten Motormodul MM2 und über dieses sowie das erste Motormodul MM1 ebenfalls mit der Zentraleinheit CU verbunden usw.

Als Sensorik sind sogenannte Motormesssysteme MMS und sogenannte direkte Messsysteme DMS gezeigt. Diese sind jeweils einem Motormodul MM1-MMn funktional zugeordnet und jeweils über einen Port an das betreffende Motormodul MM1-MMn angeschlossen. Zur eindeutigen Bezeichnung der einzelnen Messsysteme MMS, DMS sind der Kurzform "MMS" bzw. "DMS" eine erste das jeweilige Motormodul MM1-MMn bezeichnende Ziffer und eine zweite Ziffer, die den jeweiligen Port bezeichnet, an den das Messsystem MMS, DMS angeschlossen ist, nachgestellt. Die Kurzform DMS2.3 bezeichnet entsprechend ein direktes Messsystem DMS, das am zweiten Motormodul MM2 an dessen Port 3 angeschlossen ist.

Die einzelnen Kommunikationspfade in dem Netzwerk sind in der Darstellung mit DQx sowie DQx.y bezeichnet, wobei "DQ" für innerhalb des Netzwerks zum Beispiel verwendbare sogenannte DRIVE-CLiQ-Verbindungen (DRIVE-CLiQ ist u.a. eine unter der Registernummer 30146056 eingetragene deutsche Marke der Siemens AG) steht. Selbstverständlich kommt der hier vorgestellte Ansatz auch für andere Kommunikationsverbindungen in Betracht.

Die Struktur eines Netzwerks der exemplarisch in FIG 2 gezeigten Art wird als Baumstruktur bezeichnet, denn ausgehend von der Zentraleinheit CU sind in einem zentralen Kommunikationspfad (DQ1, DQ2, DQ3 .. DQn) die Motormodule MM1-MM3, MMn zusammengeschlossen. An die Motormodule MM1-MM3, MMn sind ast- oder blattartig die Sensorik MMSx.y, DMSx.y angeschlossen. Die Zentraleinheit CU bildet die Wurzel der Baumstruktur.

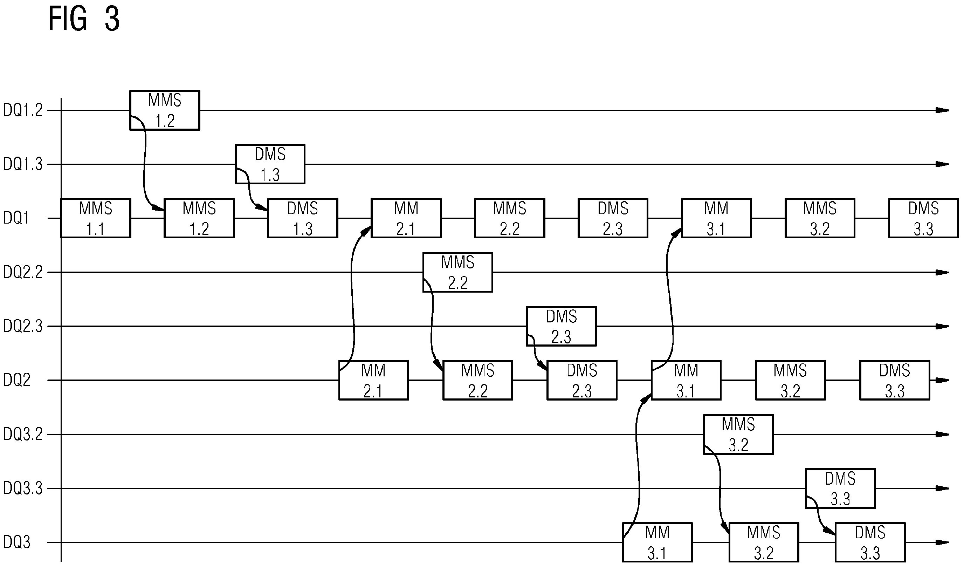

Die Darstellung in FIG 3 zeigt für das Netzwerk gemäß FIG 2 eine Kommunikation nach dem bekannten Zeitschlitzverfahren. Die gezeigten rechteckigen Boxen stellen einzelne zwischen den Komponenten des Netzwerks ausgetauschte Telegramme dar, wobei der Text in jeder Box den Sender des jeweiligen Telegramms bezeichnet. Die Telegramme sind jeweils einzelnen horizontalen Linien - im Folgenden als Zeitstrahlen oder kurz als Strahlen bezeichnet - zugeordnet und diese stehen für die Kommunikationspfade/-verbindungen innerhalb des Netzwerks (siehe FIG 2), über welche die Übermittlung des jeweiligen Telegramms erfolgt. In horizontaler Richtung ist die Zeit aufgetragen.

Der von oben gesehen dritte Strahl ist links mit DQ1 bezeichnet und steht demnach für die Verbindung zwischen dem ersten Motormodul MM1 und der Zentraleinheit CU. Auf diesem Strahl sind in regelmäßigen Abständen Telegramme dargestellt. Dies sind die Telegramme, die über die Verbindung DQ1 vom ersten Motormodul MM1 zur Zentraleinheit CU gesendet werden. Die regelmäßige zeitliche Verteilung der Telegramme ergibt sich aufgrund der zugrunde liegenden Zeitschlitzkommunikation und der Startzeitpunkt jedes für die Verbindung DQ1 gezeigten Telegramms entspricht dem Startzeitpunkt eines zuvor anhand des Kommunikationsbedarfs in dem Gesamtsystem festgelegten Zeitschlitzes. Die globale Zeitschlitzplanung erfolgt dabei durch eine in dem Gesamtsystem als Master fungierende Komponente, also zum Beispiel die Zentraleinheit CU.

Die Kommunikation während des eingangs als Schritt 2 bezeichneten Schritts läuft demnach bei dem dargestellten Szenario wie folgt ab: Zunächst sendet das erste Motormodul MM1 Daten an die Zentraleinheit CU (Telegramm MM1 auf dem Strahl DQ1). Später sendet das Motormesssystem MM1.2 des ersten Motormoduls MM1 über die Verbindung DQ1.2 Daten an das erste Motormodul MM1 (Telegramm MMS1.2 auf dem Strahl DQ1.2). Dieses wird vom ersten Motormodul MM1 entsprechend dem dafür vorgesehenen Zeitschlitz an die Zentraleinheit CU weitergeleitet (Telegramm MMS1.2 auf dem Strahl DQ1). Der Pfeil zwischen diesen beiden Telegrammen (und jeder weitere entsprechende Pfeil) verdeutlicht, dass es sich um dieselben Nutzdaten handelt und der zeitliche Abstand zwischen dem Sendebeginn der beiden Telegramme entspricht der Durchlaufzeit der Daten durch die jeweilige Komponente, hier der Durchlaufzeit durch das Motormodul MM1. Die Daten werden dabei bit- oder byteweise vom jeweiligen Eingangsport auf den jeweiligen Ausgangsport kopiert. Ein Zwischenspeichern der Nutzdaten innerhalb des Motormoduls MM1 erfolgt dabei nicht und ist auch nicht notwendig.

Nochmals später sendet das direkte Messsystem DMS1.3 des ersten Motormoduls MM1 über die Verbindung DQ1.3 Daten an das erste Motormodul MM1 (Telegramm DMS1.3 auf dem Strahl DQ1.3). Auch dieses wird vom ersten Motormodul MM1 entsprechend dem dafür vorgesehenen Zeitschlitz durch bit- oder byteweises Kopieren der eingehenden Daten an den betreffenden Ausgangsport an die Zentraleinheit CU weitergeleitet (Telegramm DMS1.3 auf dem Strahl DQ1).

Für die weiteren Motormodule MM2-MMn gilt dies entsprechend. Hinzu kommt jeweils noch, dass die von den Messsystemen MMSx.y, DMSx.y gesandten Daten zunächst beim jeweiligen Motormodul MM2-MM3 eingehen und von dort über die Verbindungen zum jeweils vorangehenden Motormodul (gezeigt für die Verbindungen DQ2 und DQ3) bis zur Zentraleinheit CU weitergeleitet werden. Auch die Daten der von einem anderen Motormodul MM2, MM3 bei einem Motormodul MM1, MM2 eingehenden Telegramme werden dabei durch bit- oder byteweises Kopieren auf den betreffenden Ausgangsport, also ohne Zwischenspeichern, weitergeleitet.

Für den eingangs als Schritt 4 bezeichneten Schritt gilt das oben skizzierte Szenario entsprechend, mit dem Unterschied, dass die Zentraleinheit CU als Sender fungiert und die Motormodule MM1-MM3 sowie deren Sensorik MMSx.y, DMSx.y die Empfänger der jeweiligen Telegramme sind. Die Kommunikation in Schritt 2 läuft - nach einer Erfassung und Aufbereitung der Messwerte in den Komponenten (Schritt 1) - am Anfang jedes Zyklus ab. Die Kommunikation in Schritt 4 läuft kurz vor dem Ende eines jeden Zyklus ab und anschließend erfolgt unmittelbar vor dem Zyklusende noch die Aufbereitung und Anwendung der neuen Sollwerte in den Komponenten (Schritt 5).

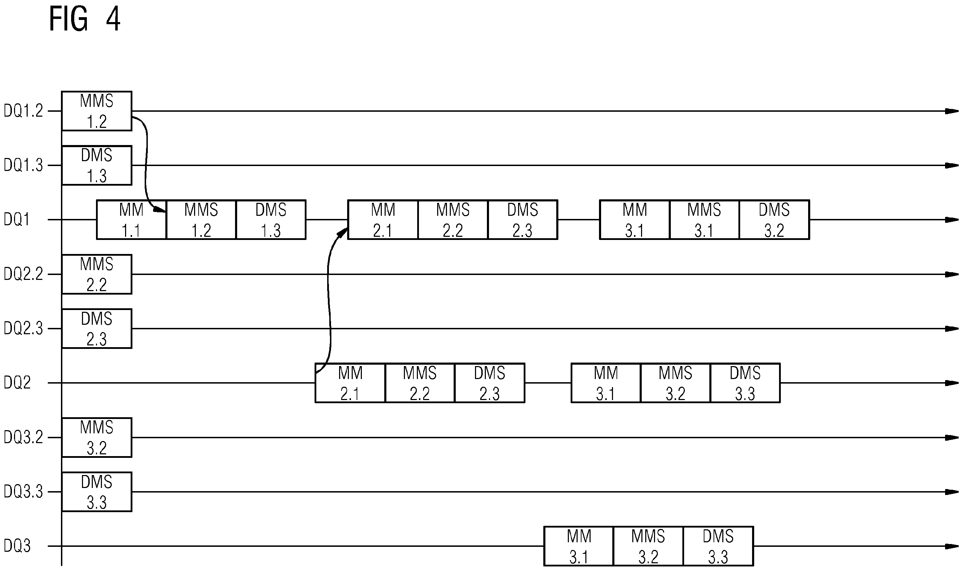

Die Darstellung in FIG 4 zeigt für dasselbe Netzwerk die sich bei einer Anwendung des hier vorgestellten Ansatzes ergebende Situation. Die Darstellung in FIG 4 zeigt wieder (wie bei FIG 3) die im Rahmen der Datenübermittlung an die Zentraleinheit CU stattfindende Kommunikation im zweiten Schritt und in jedem Zyklus schließt sich kurz vor Ende des Zyklus eine entsprechende, von der Zentraleinheit CU ausgehende Kommunikation zur Übertragung der Sollwerte zu den Komponenten an (Schritt 4; nicht gezeigt).

Die von den Messsystemen MMS, DMS an das jeweilige Motormodul MM1-MM3 gesendeten Telegramme können zu grundsätzlich beliebigen Zeitpunkten gesendet werden, solange sichergestellt ist, dass jedes Telegramm bei dem jeweiligen Motormodul MM1-MM3 vor dem Zeitpunkt eingeht, zu dem durch das Motormodul MM1-MM3 eine Weiterleitung der empfangenen Daten vorgesehen ist. Bei der Darstellung in FIG 4 ist im Interesse einfacher Verhältnisse ein gleichzeitiges Senden der Telegramme der Messsysteme MMSx.y, DMSx.y gezeigt.

Die Besonderheit bei dem hier vorgestellten Ansatz besteht darin, dass jedes Motormodul MM1-MM3 ein eingehendes Telegramm zwischenspeichert und ein zwischengespeichertes Telegramm zu einem späteren Zeitpunkt weitersendet. Das Motormodul MM1-MM3 fungiert damit in dem Netzwerk als zwischenspeichernde Komponente. Die Funktionalität des Zwischenspeicherns und späteren Versendens eingehender Daten ist als sogenannter Layer-3-Switch grundsätzlich an sich bekannt. Die zwischenspeichernde Komponente wird demgemäß im Folgenden mitunter auch - allerdings, denn die Funktion eines Layer-3-Switch kann auch über das hier benötigte Zwischenspeichern hinausgehen, ohne Verzicht auf eine weitergehende Allgemeingültigkeit - als Layer-3-Switch oder kurz auch nur als Switch SW bezeichnet.

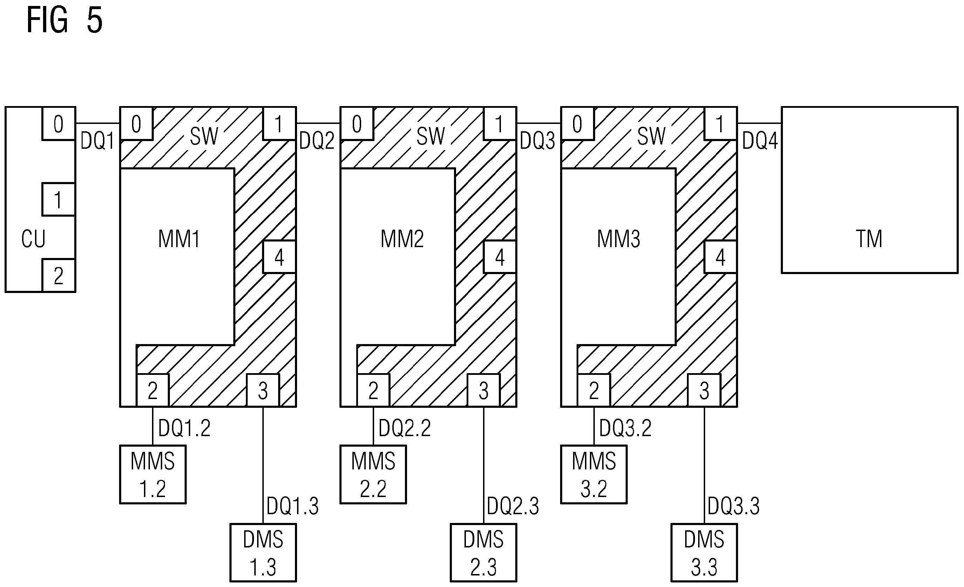

In der Darstellung in FIG 5 ist zur Illustration im Wesentlichen die exemplarische Darstellung des Netzwerks aus FIG 2 wiederholt. In FIG 5 ist für jedes Motormodul MM1-MM3 ein Switch SW dargestellt, der die Ports 0 bis 4 umfasst. Es kann auch vorgesehen sein, dass ein Motormodul MM1-MM3, MMn noch zumindest einen Port aufweist, der nicht dem Switch SW zugeordnet ist. Nicht gezeigt ist in der Darstellung in FIG 5, dass auch die Zentraleinheit CU einen solchen Switch aufweisen kann. Die obige Formulierung, wonach jedes Motormodul MM1-MM3, MMn als zwischenspeichernde Komponente (als Layer-3-Switch) fungiert, ist so zu verstehen, dass das Motormodul MM1-MM3, MMn entweder (wie in FIG 5 schematisch vereinfacht gezeigt) einen solchen Layer-3-Switch SW umfasst oder dass dem Motormodul MM1-MM3, MMn ein solcher Layer-3-Switch SW zugeordnet ist. Als Beispiel für eine Komponente mit einer früheren Version der Netzwerktechnologie ist zudem ein Terminalmodul TM dargestellt.

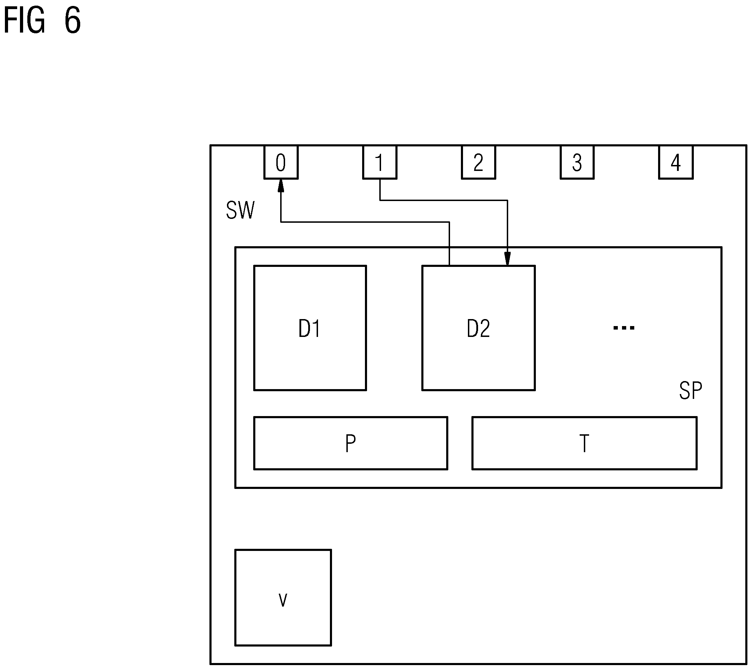

In der Darstellung in FIG 6 ist in schematisch vereinfachter Form ein Switch SW gezeigt. Dieser umfasst neben einer Anzahl von Ein- und Ausgangsports einen Speicher SP zum Zwischenspeichern zumindest der Nutzdaten eingehender Telegramme sowie zum späteren Weiterleiten derselben. Zur Vereinfachung der Beschreibung wird angenommen, dass der Switch SW eine Verarbeitungseinheit V in Form von oder nach Art eines Mikroprozessors aufweist und dass dieser beim Betrieb des Switch SW ein in den Speicher geladenes Computerprogramm P abarbeitet, wobei das Computerprogramm P die Funktionalität des Switch SW bestimmt. In der Praxis ist davon auszugehen, dass Verarbeitungseinheit V und Computerprogramm P in Form von Firmware oder Firm- und Hardware zusammengefasst sind, so dass die Erwähnung eines Computerprogramms P und einer Verarbeitungseinheit V nicht einschränkend auszulegen ist.

Die Daten D1, D2, also zumindest die Nutzdaten eingehender Telegramme, werden im Speicher SP zwischengespeichert. Beim späteren Weiterleiten der zwischengespeicherten Daten D1, D2 wird derselbe Datenbereich im Speicher SP ausgelesen. Die exemplarisch gezeigten und von einem der Ports (Eingangsport) ausgehenden und zu einem der Ports (Ausgangsport) weisenden Pfeile sollen dabei verdeutlichen, dass eingehende Daten sukzessive in einen jeweiligen Datenbereich D1, D2 geschrieben und ausgehende Daten beim späteren Weiterleiten ebenso sukzessive aus dem jeweiligen Datenbereich ausgelesen werden. Die gezeigten Pfeile sind dabei nach Art sogenannter Schreib-/Lesezeiger zu verstehen, wobei jeder Zeiger jeweils die Speicherstelle in dem Speicher SP und dem betreffenden Datenbereich D1, D2 adressiert, auf den sich eine aktuelle Schreib- oder Leseoperation bezieht. Der Zeitpunkt, zu dem empfangene Daten D1, D2 mittels des Switch SW automatisch weitergeleitet werden, wird dem Switch SW extern vorgegeben, zum Beispiel durch die Zentraleinheit CU. Dafür wird in den Speicher SP zumindest ein Zeitwert T geschrieben, der mittels der Verarbeitungseinheit V unter Kontrolle des Computerprogramms P überwacht wird. Wenn der durch den Zeitwert T definierte Zeitpunkt bezogen auf die Zykluszeit erreicht ist, veranlasst der Switch SW automatisch die Weiterleitung der betreffenden Daten über den jeweiligen Ausgangsport. Der Switch SW kann eine Mehrzahl derartiger Zeitwerte T verwalten und überwachen.

Zurückkommend auf die Darstellung in FIG 4 bedeutet die Funktion eines Motormoduls MM1-MM3, MMn (auch) als Layer-3-Switch SW demnach mit Bezug auf das erste Motormodul MM1, dass die über die Verbindungen DQ1.2 und DQ1.3 von den Messsystemen MMS1.2, DMS1.3 an Port 2 bzw. Port 3 empfangenen Daten zunächst im Switch SW zwischengespeichert werden und dann zu einem vorgegebenen festen Sendezeitpunkt weitergeleitet werden. Dieser vorgegebene feste Zeitpunkt (siehe FIG 6: Zeitpunkt T) ergibt sich (wie bei der Situation in FIG 3) aufgrund einer Zeitschlitzplanung für das Gesamtsystem und einem resultierenden festen Zeitschlitz.

Gleiches gilt für die weiteren Motormodule MM2-MMn mit dem Unterschied, dass deren Daten nach einer internen Zwischenspeicherung und einer Zusammenfassung noch jeweils über die Verbindung DQ2, DQ3 zum jeweils vorangehenden Motormodul MM1, MM2 gesendet werden, bis sie schließlich beim ersten Motormodul MM1 eintreffen. Dieses sendet die empfangenen Daten entsprechend der Zeitschlitzplanung und dem resultierenden festen Zeitschlitz an die Zentraleinheit CU.

Bei einem Vergleich des Kommunikationsszenarios in FIG 4 mit dem Kommunikationsszenario in FIG 3 auf Basis des bekannten Zeitschlitzverfahrens ergibt sich, dass bei dem hier vorgeschlagenen Ansatz (FIG 4, FIG 5) eine geringere Anzahl von Zeitschlitzen resultiert. Beim gezeigten Beispiel ergeben sich drei Zeitschlitze, nämlich ein erster Zeitschlitz für die Telegrammfolge MM1, MMS1.2, DMS1.3 ein zweiter Zeitschlitz für die Telegrammfolge MM2, MMS2.2, DMS2.3 und ein dritter Zeitschlitz für die Telegrammfolge MM3, MMS3.2, DMS3.3. Demgegenüber sind bei dem bisherigen Zeitschlitzverfahren bei demselben Netzwerk neun Zeitschlitze notwendig, nämlich jeweils ein Zeitschlitz für jeweils eines der Telegramme MM1, MMS1.2, DMS1.3, MM2, MMS2.2, DMS2.3 sowie MM3, MMS3.2 und DMS3.3.

Der Switch SW ist entweder als zusätzliche Komponente oder als Zusatzfunktion innerhalb einer bestehenden Komponente, insbesondere innerhalb eines Motormoduls MM1-MM3, MMn, in das Netzwerk integriert. Die Baumstruktur des Netzwerks sowie die zentrale Zeitschlitzplanung bleiben unangetastet. Das Prinzip der durch den Master, also zum Beispiel die Zentraleinheit CU, festgelegten Zeitschlitze wird auf den Switch SW erweitert. Dadurch arbeitet der Switch SW nicht ereignisgetrieben, sondern rein zeitschlitzgetrieben. Durch den Switch SW wird das Netzwerk in Teilnetzwerke aufgeteilt, deren Zeitschlitze voneinander entkoppelt sind. Diese Lösung erfüllt ebenso die eingangs skizzierten Echtzeitanforderungen. Der oder jeder Switch SW muss jedes Datenpaket komplett zwischenspeichern, bevor er es weitersenden kann. Dadurch erhöht sich zwar die Latenz, allerdings entsteht dadurch die Möglichkeit, das Netzwerk wesentlich flexibler an die eingangs genannten Besonderheiten eines Antriebsnetzwerks anzupassen.
Im Einzelnen:
- Wenn eine Komponente der jeweiligen Maschine M, also zum Beispiel ein Motormodul MM1-MM3, MMn, ein Telegramm, also zum Beispiel ein Telegramm von der angeschlossenen Sensorik, weiterleiten soll, werden zwei Telegramme geplant. Das zum Beispiel von der Sensorik stammende Telegramm (erstes Telegramm) soll zu einem ersten Zeitpunkt t1 an einem der Ports 1-4, zum Beispiel an Port 2, empfangen werden. Das zur Weiterleitung dieser Daten vorgesehene Telegramm (zweites Telegramm) soll zu einem zweiten Zeitpunkt t2 über einen anderen Port, zum Beispiel Port 0, gesendet werden. Die Komponente agiert für diese Telegramme genau dann als Switch, wenn t1 < t2 ist und beim Senden des zweiten Telegramms die Daten, zumindest die Nutzdaten, des ersten Telegramms verwendet werden. Eine tatsächliche Abhängigkeit zwischen den beiden Telegrammen besteht nicht und wird nur indirekt über die jeweiligen Daten und die Zeitüberwachung jedes einzelnen Telegramms hergestellt. Die Zeitpunkte, zu denen die beiden Telegramme im Netzwerk übermittelt werden, werden von einer als Master fungierenden Einheit, also zum Beispiel der Zentraleinheit CU, unter Beachtung notwendiger Randbedingungen, hier also t1 < t2, geplant und festgelegt.

Die Zwischenspeicherung der Daten eines Telegramms im Switch SW und die Unabhängigkeit der Zeitschlitze in den Teilnetzwerken erlauben es, mehrere Datenpakete unterschiedlicher Komponenten auf Teilstrecken zu lückenlosen Telegrammen zusammenzufassen, ohne dabei die Eigenständigkeit der Datenpakete aufzugeben. Dies ist in FIG 4 durch die Zusammenfassung der Telegramme auf den Verbindungen DQ1, DQ2 und DQ3 gezeigt. Durch den Entfall von Pausenzeiten zwischen den Telegrammen ergibt sich eine bessere Ausnutzung der verfügbaren Datenrate.
- Teilnetzwerke mit unterschiedlichen physikalischen Randbedingungen können mit unterschiedlichen Datenraten betrieben werden.
- Telegramme werden nur in den Teilnetzen ausgetauscht, in denen sie tatsächlich benötigt werden.
- Schließlich muss ein Telegramm nur innerhalb eines jeweiligen Teilnetzwerks von allen davon umfassten Komponenten "verstanden" werden. Dies erlaubt es, in jedem Teilnetzwerk die Möglichkeiten der aktuellen Netzwerkversion voll auszuschöpfen, während in anderen Teilnetzwerken mit zu älteren Netzwerkversionen kompatiblen Telegrammen kommuniziert werden kann, wie dies in der Darstellung in FIG 5 mit dem Terminalmodul TM gezeigt ist. Da der Switch SW als Layer-3-Switch den für die Kompatibilität entscheidenden Layer 2 eines zum Beispiel vom Terminalmodul TM oder einer sonstigen Komponente mit einer früheren Version der Netzwerktechnologie stammenden Telegramms neu aufbaut, setzt er die Übertragung automatisch auf das für das jeweilige Teilnetzwerk richtige Telegrammformat um.

Insgesamt lässt sich damit festhalten, dass mit dem hier vorgestellten Ansatz die bekannte Technologie eines Layer-3-Switch SW erstmals zur effizienten Behandlung der technischen und physikalischen Besonderheiten einer Kommunikation zwischen Komponenten einer Maschine M der eingangs genannten Art oder allgemein zwischen Antriebskomponenten eingesetzt wird. Von besonderer Bedeutung ist dabei die Beibehaltung der Baumstruktur des Netzwerks bei gleichzeitiger Erfüllung der extremen Echtzeitanforderungen. Eine ringförmige Netztopologie, wie sie bei anderen High-Performance Echtzeit-Netzwerken verwendet wird, ist bei Antriebskomponenten normalerweise nicht möglich, weil technisch bedingt manche Komponenten nur einen Netzwerkanschluss haben können.

Die Kombination aus Baumtopologie, Layer-3-Switch SW und hochpräzisen Zeitschlitzen ermöglicht auch den Einsatz des Switch SW im Sinne einer Seriell-Parallel-Umsetzung. Dabei sammelt oder verteilt die Switch-Komponente, also zum Beispiel ein einen Switch SW umfassendes Motormodul MM1-MM3, MMn oder eine sonstige Komponente der jeweiligen Maschine M, die Datenpakete mehrerer parallel angeschlossener Antriebskomponenten, die zum Beispiel aufgrund besonderer Randbedingungen (siehe oben: Schleppkabel, Störfelder, Potentialtrennung) keine hohe Datenrate zulassen. Die Datenübertragung zwischen dem Switch SW oder der Komponente mit einem solchen Switch SW und der Zentraleinheit CU erfolgt mit hoher Datenrate im Zeitmultiplex über die jeweilige Verbindung. Durch Einsatz eines Switch SW ist dies gegenüber anderen Lösungen im Antriebsumfeld ohne Durchbrechung der einheitlichen Struktur des Kommunikationsnetzwerks möglich.

Der Switch SW ermöglicht auch die Steigerung der Datenrate auf denjenigen Teilen des Netzwerks, die keiner Beschränkung der weiter oben genannten Art, also keiner Beschränkung, die eine reduzierte Datenrate nach sich zieht, unterliegen. Die Verwendung zumindest eines Switch SW stellt deshalb einen entscheidenden Schritt zur Erhöhung der Komponentenanzahl eines Antriebsnetzwerks bei gleichbleibender Zyklus-/Reaktionszeit dar.

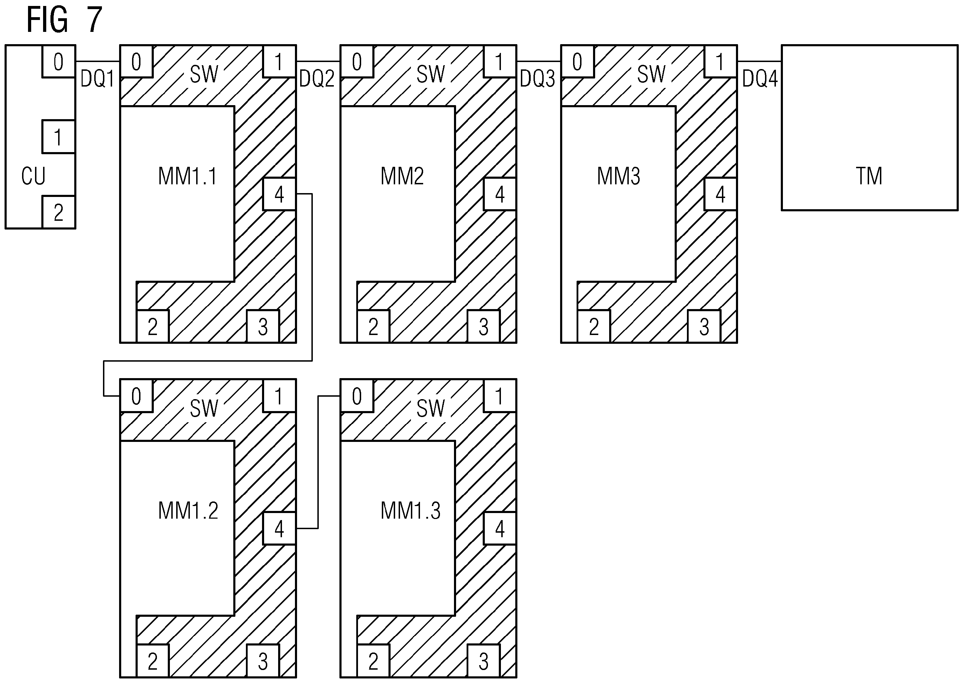

Auch die für eine Parallelschaltung von Leistungsteilen angestrebte zusätzliche Kommunikation ist ohne Belastung des übrigen Netzwerks möglich, wenn die an der Parallelschaltung beteiligten Leistungsteile in einem Subnetz zusammengefasst und über einen Switch SW mit dem übrigen Netzwerk verbunden werden. Dafür zeigt die Darstellung in FIG 7 schematisch vereinfacht zwei zusätzliche Motormodule MM1.2, MM1.3 und es soll davon ausgegangen werden, dass deren Leistungsteile zusammen mit dem Leistungsteil des jetzt mit MM1.1 bezeichneten Motormoduls in einer Parallelschaltung betrieben werden (die Parallelschaltung bezieht sich also nicht auf das Kommunikationsnetzwerk). Die bei einer solchen Parallelschaltung der Leistungsteile notwendige Kommunikation zwischen den betroffenen Motormodulen MM1.1, MM1.2, MM1.3 kann jetzt, aufgrund der Tatsache, dass zumindest das in dem Hauptzweig (DQ1, DQ2, DQ3, ...) des Netzwerks befindliche Motormodul MM1.1 als zwischenspeichernde Komponente (Switch SW) fungiert, unabhängig von der Kommunikation in dem Gesamtnetzwerk ablaufen.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben werden eine Produktions- oder Werkzeugmaschine M sowie ein Verfahren zum Betrieb einer solchen Maschine M, wobei zwischen kommunikativ verbundenen Komponenten MM1-MM3, MMn, MMSx.y, DMSx.y der Maschine M ausgetauschte Telegramme durch zumindest eine Komponente MM1-MM3, MMn, MMSx.y, DMSx.y zwischengespeichert werden. Die oder jede betreffende Komponente MM1-MM3, MMn, MMSx.y, DMSx.y fungiert demnach als zwischenspeichernde Komponente MM1-MM3, MMn, MMSx.y, DMSx.y und die zwischengespeicherten Daten werden durch diese zu einem späteren, der zwischenspeichernden Komponente MM1-MM3, MMn, MMSx.y, DMSx.y fest vorgegebenen Zeitpunkt weitergesendet. Die zwischenspeichernde Komponente MM1-MM3, MMn, MMSx.y, DMSx.y arbeitet demnach nach Art eines Layer-3-Switch SW. Eingehende Daten werden zwischenspeichert und später weitergesendet. Die zwischenspeichernde Komponente MM1-MM3, MMn, MMSx.y, DMSx.y arbeitet dabei aber nicht ereignisgetrieben, sondern rein durch den jeweils vorgegebenen Zeitpunkt getrieben. Damit ist die zwischenspeichernde Komponente MM1-MM3, MMn, MMSx.y, DMSx.y nahtlos in einem bisherigen zeitschlitzgesteuerten Kommunikationsverfahren verwendbar und bewirkt eine Entkopplung der von der jeweiligen Maschine M umfassten Komponenten MM1-MM3, MMn, MMSx.y, DMSx.y und erlaubt eine Optimierung der innerhalb der Maschine M ablaufenden Echtzeitkommunikation.

## Patentansprüche

1. Produktions- oder Werkzeugmaschine (M) mit einer Mehrzahl davon umfasster Komponenten (MM1, MM2, MM3, TM, MMSx.y, DMSx.y),
wobei die Komponenten (MM1, MM2, MM3, TM, MMSx.y, DMSx.y) zur Echtzeitkommunikation mit einer vorgegebenen oder vorgebbaren Zykluszeit in einem Netzwerk zusammengeschlossen und untereinander kommunikativ verbunden sind,
**dadurch gekennzeichnet,**
**dass** zumindest eine der Komponenten (MM1, MM2, MM3, TM, MMSx.y, DMSx.y) als Layer-3-Switch (SW) fungiert,
**dass** mittels der als Layer-3-Switch (SW) fungierenden Komponente (MM1, MM2, MM3, TM, MMSx.y, DMSx.y) von einer anderen Komponente (MM1, MM2, MM3, TM, MMSx.y, DMSx.y) empfangene Telegramme zwischenspeicherbar sind und ein zwischengespeichertes Telegramm zu einem vorgegebenen, auf die Zykluszeit bezogenen Zeitpunkt (T) weiterversendbar ist und
**dass** der vorgegebene, auf die Zykluszeit bezogene Zeitpunkt (T) im Zusammenhang mit einem Hochlauf der Produktions- oder Werkzeugmaschine (M) ermittelt und der jeweiligen Komponente (MM1, MM2, MM3, TM, MMSx.y, DMSx.y) vorgebbar ist.

2. Produktions- oder Werkzeugmaschine (M) nach Anspruch 1, wobei die Komponenten (MM1, MM2, MM3, TM, MMSx.y, DMSx.y) in einer Baumstruktur mit einer Zentraleinheit (CU) der Produktions- oder Werkzeugmaschine (M) verbunden sind und wobei zumindest die mit der Zentraleinheit (CU) direkt verbundene Komponente (MM1, MM2, MM3, TM, MMSx.y, DMSx.y), über die für weitere Komponenten (MM1, MM2, MM3, TM, MMSx.y, DMSx.y) eine indirekte Verbindung zur Zentraleinheit (CU) besteht, als Layer-3-Switch (SW) fungiert.

3. Produktions- oder Werkzeugmaschine (M) nach Anspruch 1 oder 2, wobei die Komponenten (MM1, MM2, MM3, TM, MMSx.y, DMSx.y) in einer Baumstruktur mit einer Zentraleinheit (CU) der Produktions- oder Werkzeugmaschine (M) verbunden sind und wobei zumindest eine direkt oder indirekt mit der Zentraleinheit (CU) verbundene Komponente (MM1, MM2, MM3, TM, MMSx.y, DMSx.y) als Layer-3-Switch (SW) fungiert und wobei mit dieser weitere Komponenten (MM1, MM2, MM3, TM, MMSx.y, DMSx.y) in einer Parallelschaltung verbunden sind.

4. Verfahren zum Betrieb einer Produktions- oder Werkzeugmaschine (M), wobei die Produktions- oder Werkzeugmaschine (M) eine Mehrzahl von untereinander kommunikativ verbundenen Komponenten (MM1, MM2, MM3, TM, MMSx.y, DMSx.y) umfasst,
wobei die Komponenten (MM1, MM2, MM3, TM, MMSx.y, DMSx.y) im Rahmen einer Echtzeitkommunikation und während einer vorgegebenen oder vorgebbaren Zykluszeit untereinander Telegramme austauschen,
wobei die Telegramme entweder direkt oder indirekt an eine von der Produktions- oder Werkzeugmaschine (M) umfasste Zentraleinheit (CU) gesendet werden,
**dadurch gekennzeichnet,**
**dass** zumindest eine der Komponenten (MM1, MM2, MM3, TM, MMSx.y, DMSx.y) als Layer-3-Switch (SW) fungiert,
**dass** zumindest eine der als Layer-3-Switch (SW) fungierenden Komponenten (MM1, MM2, MM3, TM, MMSx.y, DMSx.y) von einer anderen Komponente (MM1, MM2, MM3, TM, MMSx.y, DMSx.y) empfangene Telegramme zwischenspeichert und ein zwischengespeichertes Telegramm zu einem vorgegebenen, auf die Zykluszeit bezogenen Zeitpunkt (T) weitersendet,
wobei der vorgegebene, auf die Zykluszeit bezogene Zeitpunkt (T) im Zusammenhang mit einem Hochlauf der Produktions- oder Werkzeugmaschine (M) ermittelt und der jeweiligen Komponente (MM1, MM2, MM3, TM, MMSx.y, DMSx.y) vorgegeben wird.

5. Verfahren nach Anspruch 4, wobei die oder jede Komponente (MM1, MM2, MM3, TM, MMSx.y, DMSx.y), die eingehende Telegramme zwischenspeichert und später weitersendet, mehrere Telegramme zusammenfasst und die zusammengefassten Telegramme zu einem vorgegebenen, auf die Zykluszeit bezogenen Zeitpunkt (T) weitersendet.

6. Verfahren zum Betrieb einer Produktions- oder Werkzeugmaschine (M) nach einem der Ansprüche 4 oder 5, wobei für ein Telegramm, das bei einer Komponente (MM1, MM2, MM3, TM, MMSx.y, DMSx.y), die eingehende Telegramme zwischenspeichert und später weitersendet, eingeht und für die Zentraleinheit (CU) bestimmt ist, zentral zwei auf die Zykluszeit bezogene Sendezeitpunkte (T) geplant werden, nämlich ein erster Sendezeitpunkt zum Senden des Telegramms an die jeweilige, das Telegramm zwischenspeichernde Komponente (MM1, MM2, MM3, TM, MMSx.y, DMSx.y) und ein zweiter Sendezeitpunkt zum Weitersenden der zwischengespeicherten Daten durch die jeweilige Komponente, wobei der erste Sendezeitpunkt vor dem zweiten Sendezeitpunkt liegt.

7. Computerprogramm (P) mit Programmcodemitteln, um alle Schritte von jedem beliebigen der Ansprüche 4 bis 6 durchzuführen, wenn das Computerprogramm (P) auf einer Produktions- oder Werkzeugmaschine (M) oder einer davon umfassten Komponente (MM1, MM2, MM3, TM, MMSx.y, DMSx.y) ausgeführt wird.

## Claims

1. Production machine or machine tool (M) with a plurality of components (MM1, MM2, MM3, TM, MMSx.y, DMSx.y) comprised by it,
wherein the components (MM1, MM2, MM3, TM, MMSx.y, DMSx.y) are connected together in a network and have communication links between each other for the purpose of real-time communication with a cycle time which is prescribed or can be prescribed, **characterised in that**
at least one of the components (MM1, MM2, MM3, TM, MMSx.y, DMSx.y) functions as a layer-3 switch (SW),
by means of the component (MM1, MM2, MM3, TM, MMSx.y, DMSx.y) which functions as a layer-3 switch (SW) telegrams received from another component (MM1, MM2, MM3, TM, MMSx.y, DMSx.y) can be stored temporarily and a temporarily stored telegram can be forwarded at a time point (T) which is prescribed relative to the cycle time, and
the time point (T) which is prescribed relative to the cycle time can be determined in conjunction with a runup of the production machine or machine tool (M) and can be issued to the component (MM1, MM2, MM3, TM, MMSx.y, DMSx.y) concerned.

2. Production machine or machine tool (M) according to claim 1,
wherein the components (MM1, MM2, MM3, TM, MMSx.y, DMSx.y) are linked in a tree structure to a central unit (CU) of the production machine or machine tool (M) and wherein at least the component (MM1, MM2, MM3, TM, MMSx.y, DMSx.y) which is directly linked with the central unit (CU), through which an indirect link to the central unit (CU) exists for the other components (MM1, MM2, MM3, TM, MMSx.y, DMSx.y), functions as a layer-3 switch (SW).

3. Production machine or machine tool (M) according to claim 1 or 2,
wherein the components (MM1, MM2, MM3, TM, MMSx.y, DMSx.y) are linked in a tree structure with a central unit (CU) of the production machine or machine tool (M), and wherein at least one component (MM1, MM2, MM3, TM, MMSx.y, DMSx.y) which is directly or indirectly linked to the central unit (CU) functions as a layer-3 switch (SW), and wherein this links further components (MM1, MM2, MM3, TM, MMSx.y, DMSx.y) in a parallel circuit.

4. Method for operating a production machine or machine tool (M),
wherein the production machine or machine tool (M) comprises a plurality of components (MM1, MM2, MM3, TM, MMSx.y, DMSx.y) which have communication links with each other,
wherein the components (MM1, MM2, MM3, TM, MMSx.y, DMSx.y) exchange telegrams with each other in the framework of real-time communication and during a cycle time which is prescribed or can be prescribed,
wherein the telegrams are sent either directly or indirectly to a central unit (CU) comprised by the production machine or machine tool (M),
**characterised in that**
at least one of the components (MM1, MM2, MM3, TM, MMSx.y, DMSx.y) functions as a layer-3 switch (SW),
at least one of the components (MM1, MM2, MM3, TM, MMSx.y, DMSx.y) which functions as a layer-3 switch (SW) stores temporarily telegrams received from another component (MM1, MM2, MM3, TM, MMSx.y, DMSx.y), and forwards a temporarily stored telegram at a time point (T) which is prescribed relative to the cycle time,
wherein the time point (T), which is prescribed relative to the cycle time, is determined in conjunction with a runup of the production machine or machine tool (M) and is issued to the component (MM1, MM2, MM3, TM, MMSx.y, DMSx.y) concerned.

5. Method according to claim 4, in which the component, or every component (MM1, MM2, MM3, TM, MMSx.y, DMSx.y), which stores temporarily and later forwards incoming telegrams, combines together several telegrams and forwards the combined telegrams at a time point (T) prescribed relative to the cycle time.

6. Method for operating a production machine or machine tool (M) according to one of claims 4 or 5,
wherein, for a telegram which comes in to a component (MM1, MM2, MM3, TM, MMSx.y, DMSx.y) which temporarily stores and later forwards an incoming telegram which is intended for the central unit (CU), two sending time points (T) are centrally planned relative to the cycle time, namely a first sending time point for the sending of the telegram to the component (MM1, MM2, MM3, TM, MMSx.y, DMSx.y) concerned which temporarily stores the telegram, and a second sending time point for the forwarding of the temporarily stored data items by the component concerned, wherein the first sending time point lies before the second sending time point.

7. Computer program (P) with program code means for carrying out all the steps of any of claims 4 to 6 when the computer program (P) is executed on a production machine or machine tool (M) or on a component (MM1, MM2, MM3, TM, MMSx.y, DMSx.y) comprised by it.

## Revendications

1. Machine (M) de production ou machine-outil (M), ayant une pluralité d'éléments (MM1, MM2, MM3, TM, MMSx.y, DMSx.y), qui y sont impliqués,
dans laquelle les éléments (MM1, MM2, MM3, TM, MMSx.y, DMSx.y) sont, pour la communication en temps réel avec un temps de cycle donné à l'avance ou pouvant l'être, enchaînés en un réseau et reliés en communication entre eux, **caractérisée**
**en ce qu'**au moins l'un des éléments (MM1, MM2, MM3, TM, MMSx.y, DMSx.y) sert de layer-3-switch (SW),
**en ce qu'**au moyen de l'élément (MM1, MM2, MM3, TM, MMSx.y, DMSx.y), servant de layer-3-switch (SW), des télégrammes, reçus par un autre élément (MM1, MM2, MM3, TM, MMSx.y, DMSx.y), peuvent être mis en mémoire tampon et un télégramme mis en mémoire tampon peut être réacheminé à un instant (T) donné à l'avance rapporté au temps de cycle et déterminé en relation avec un démarrage de la machine (M) de production ou de la machine-outil (M) et être prescrit à l'élément (MM1, MM2, MM3, TM, MMSx.y, DMSx.y) respectif.

2. Machine (M) de production ou machine-outil (M) suivant la revendication 1, dans laquelle les éléments (MM1, MM2, MM3, TM, MMSx.y, DMSx.y) sont reliés, en une structure arborescente, à une unité (CU) centrale de la machine (M) de production ou de la machine-outil (M) et dans laquelle au moins les éléments (MM1, MM2, MM3, TM, MMSx.y, DMSx.y), reliés directement à l'unité (CU) centrale, par lesquels il y a, pour les autres éléments (MM1, MM2, MM3, TM, MMSx.y, DMSx.y) une liaison indirecte avec l'unité (CU) centrale, servent de layer-3-switch (SW).

3. Machine (M) de production ou machine-outil (M) suivant la revendication 1 ou 2, dans laquelle les éléments (MM1, MM2, MM3, TM, MMSx.y, DMSx.y) sont reliés, en une structure arborescente, à une unité (CU) centrale de la machine (M) ou de la machine-outil (M) et dans laquelle au moins un élément (MM1, MM2, MM3, TM, MMSx.y, DMSx.y), relié directement ou indirectement à l'unité (CU) centrale, sert de layer-3-switch (SW) et dans laquelle ils sont reliés en un circuit en parallèle à cet autre élément (MM1, MM2, MM3, TM, MMSx.y, DMSx.y).

4. Procédé pour faire fonctionner une machine (M) de production ou une machine-outil (M), la machine (M) de production ou la machine-outil (M) comprenant une pluralité d'éléments (MM1, MM2, MM3, TM, MMSx.y, DMSx.y), reliés entre eux en communication,
dans lequel les éléments (MM1, MM2, MM3, TM, MMSx.y, DMSx.y) échangent, dans le cadre d'une communication en temps réel et pendant un temps de cycle donné à l'avance ou pouvant l'être, des télégrammes entre eux,
dans lequel les télégrammes sont envoyés directement ou indirectement à une unité (CU) centrale impliquée dans la machine (M) de production ou la machine-outil (M), **caractérisé**
**en ce qu'**au moins l'un des éléments (MM1, MM2, MM3, TM, MMSx.y, DMSx.y) sert de layer-3-switch (SW),
**en ce qu'**au moins l'un des éléments (MM1, MM2, MM3, TM, MMSx.y, DMSx.y), servant de layer-3-switch (SW), met en mémoire tampon des télégrammes reçus d'un autre élément (MM1, MM2, MM3, TM, MMSx.y, DMSx.y) et réachemine un télégramme mis en mémoire tampon à un instant (T) donné à l'avance rapporté au temps de cycle
dans lequel on détermine l'instant (T) donné à l'avance rapporté au temps de cycle en liaison avec un démarrage de la machine (M) de production ou de la machine-outil (M) et on le prescrit à l'élément (MM1, MM2, MM3, TM, MMSx.y, DMSx.y) respectif.

5. Procédé suivant la revendication 4, dans lequel le ou chaque élément (MM1, MM2, MM3, TM, MMSx.y, DMSx.y) met en mémoire tampon les télégrammes entrant et les réachemine ultérieurement, rassemble plusieurs télégrammes et réachemine les télégrammes rassemblés à un instant (T) donné à l'avance rapporté au temps de cycle.

6. Procédé pour faire fonctionner une machine (M) de production ou une machine-outil (M) suivant l'une des revendications 4 ou 5, dans lequel, pour un télégramme qui entre dans un élément (MM1, MM2, MM3, TM, MMSx.y, DMSx.y), qui met en mémoire tampon les télégrammes entrant et les réachemine ultérieurement et qui est destiné à l'unité (CU) centrale, on planifie centralement deux instants (T) d'émission rapportés au temps de cycle, à savoir un premier instant d'émission pour envoyer le télégramme à l'élément (MM1, MM2, MM3, TM, MMSx.y, DMSx.y) respectif mettant le télégramme en mémoire tampon, et un deuxième instant d'émission pour réacheminer les données mises en mémoire tampon par l'élément respectif, le premier instant d'émission étant avant le deuxième instant d'émission.

7. Programme (P) d'ordinateur ayant des moyens de code de programme pour effectuer tous les stades de chaque quelconque des revendications 4 à 6, lorsque le programme (P) d'ordinateur est exécuté sur une machine (M) de production ou sur une machine-outil (M) ou sur un élément (MM1, MM2, MM3, TM, MMSx.y, DMSx.y ), qui y est impliqué.
